(19) **Europäisches Patentamt European Patent Office Office européen des brevets**

(11) **EP 4 641 341 A1**

(12) **EUROPEAN PATENT APPLICATION**
published in accordance with Art. 153(4) EPC

(43) Date of publication:
29.10.2025 Bulletin 2025/44

(21) Application number: 23907177.2

(22) Date of filing: 22.12.2023

(51) International Patent Classification (IPC):
$G05D\ 1/622^{(2024.01)}$        $G05D\ 1/43^{(2024.01)}$
$G05D\ 1/46^{(2024.01)}$

(52) Cooperative Patent Classification (CPC):
G05D 1/622; G01S 7/295; G01S 7/53; G01S 13/86;
G01S 13/89; G01S 13/931; G01S 15/86;
G01S 15/89; G01S 15/931; G05D 1/242;
G05D 1/2465; G01S 2013/9318; G01S 2013/9319;
G05D 2109/10; G05D 2109/254;        (Cont.)

(86) International application number:
PCT/JP2023/046105

(87) International publication number:
WO 2024/135817 (27.06.2024 Gazette 2024/26)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  23.12.2022  JP 2022206982

(71) Applicant: **KAWASAKI JUKOGYO KABUSHIKI**
**KAISHA**
**Kobe-shi, Hyogo 650-8670 (JP)**

(72) Inventors:
• **NAKAMURA Kazuyuki**
**Chuo-ku, Kobe-shi**
**Hyogo 650-8670 (JP)**
• **KAIDA Shinji**
**Yokohama-shi, Kanagawa (JP)**

(74) Representative: **Müller-Boré & Partner**
**Patentanwälte PartG mbB**
**Friedenheimer Brücke 21**
**80639 München (DE)**

(54) **CONTROL DEVICE, MOBILE BODY, CONTROL METHOD, AND PROGRAM**

(57)    A control device that controls a propulsion device of a moving body includes an input unit, to which is input point group data generated by a first detection device detecting a surrounding environment of the moving body, and a controller. Using an own position and a target position of the moving body, the controller generates a command value, for the propulsion device, for moving the moving body to the target position. The controller calculates, for a plurality of point data based on the point group data, repulsion force vectors each representing a virtual repulsion force with which the point data cause the moving body to move away, the vectors becoming larger the smaller a distance to the moving body. The controller calculates a repulsion force vector sum by summing the plurality of calculated repulsion force vectors, and modifies the generated command value using the calculated repulsion force vector sum.

FIG.2

(Cont. next page)

(52) Cooperative Patent Classification (CPC): (Cont.)
G05D 2109/38; G05D 2111/17; G05D 2111/20

## Description

Technical Field

The present disclosure relates to a control device controlling a propulsion device of a moving body, a moving body provided with the control device, a control method, and a program.

Background Art

Technology is known that moves a moving body to a target position while avoiding a collision between the moving body and an obstacle. For example, in JP 6765156 B1, a control device is disclosed that calculates a potential field based on a shortest distance between a robot arm and an obstacle and on a relative velocity of the obstacle, and calculates an acceleration vector of the robot arm using the calculated potential field. The control device sequentially calculates the potential field and the acceleration vector each time the robot arm moves, and moves the robot arm based on the calculated acceleration vector.

Summary of Invention

In the technology disclosed in JP 6765156 B1, since the shortest distance used to calculate the potential field sequentially changes due to the movement of the robot arm, the acceleration vector for avoiding the obstacle may also change sequentially. Thus, depending on a shape of the obstacle and an acceleration capability of the robot arm, there is a concern that the collision between the robot arm and the obstacle cannot be avoided, or a concern that the avoidance thereof may become inefficient. As a result, there is demand for technology with which any moving body, not limited to the robot arm, can reach a target position while efficiently avoiding collision with an obstacle.

In light of the concern that, due to the fact that the shortest distance used to calculate the potential field sequentially changes as a result of the movement of the moving body, the collision between the moving body and the obstacle cannot be avoided, or the avoidance thereof may become inefficient, it is an object of the present disclosure to provide a control device that controls a propulsion device of the moving body and that is capable of moving the moving body to a target position while efficiently avoiding the collision with the obstacle.

Means for solving the problem

According to a first aspect of the present disclosure, a control device is provided that controls a propulsion device of a moving body. The control device includes an input unit configured to have point group data input thereto, the point group data being generated by a first detection device detecting a surrounding environment of the moving body, and includes a controller. The controller is configured to generate a command value for the propulsion device, using an own position of the moving body and a target position of the moving body, the command value being used to move the moving body to the target position. The controller is configured to calculate a repulsion force vector for a plurality of point data, the repulsion force vector being a vector representing a virtual repulsion force to cause the moving body to move away, the point data being based on the generated point group data, and the repulsion force vector becoming larger the smaller a distance to the moving body, and to calculate a repulsion force vector sum obtained by summing a plurality of the calculated repulsion force vectors. The controller is configured to modify the generated command value using the calculated repulsion force vector sum.

According to a second aspect of the present disclosure, a control method is provided that controls a propulsion device of a moving body. **In** this control method, a control device controlling the propulsion device is configured to: generate a command value for the propulsion device, using an own position of the moving body and a target position of the moving body, the command value being used to move the moving body to the target position; calculate a repulsion force vector for a plurality of point data, the repulsion force vector being a vector representing a virtual repulsion force with which the point data cause the moving body to move away, the point data being based on point group data generated by a first detection device detecting a surrounding environment of the moving body, and the repulsion force vector becoming larger the smaller a distance to the moving body; calculate a repulsion force vector sum obtained by summing a plurality of the calculated repulsion force vectors; and modify the generated command value using the calculated repulsion force vector sum.

According to a third aspect of the present disclosure, a program is provided that controls a propulsion device of a moving body. This program causes a computer to perform processes including: generating a command value for the propulsion device, using an own position of the moving body and a target position of the moving body, the command value being used to move the moving body to the target position; calculating a repulsion force vector for a plurality of point data, the repulsion force vector being a vector representing a virtual repulsion force with which the point data cause the moving body to move away, the point data being based on point group data generated by a first detection device detecting a surrounding environment of the moving body, and the repulsion force vector becoming larger the smaller a distance to the moving body; calculating a repulsion force vector sum obtained by summing a plurality of the calculated repulsion force vectors; and modifying the generated command value using the calculated repulsion force vector sum.

Brief description of the drawings

FIG. 1 is an overall view of a moving body according to a first embodiment.

FIG. 2 is a block diagram illustrating a configuration of a control system of the moving body according to the first embodiment.

FIG. 3 is an image diagram for describing propulsion processing.

FIG. 4 is a flowchart of the propulsion processing according to the first embodiment.

FIG. 5 is an image diagram illustrating an example of an avoidance operation of the moving body with respect to an object.

FIG. 6 is an image diagram illustrating an example of the avoidance operation of the moving body with respect to another object.

FIG. 7 is an overall view of a moving body according to a second embodiment.

FIG. 8 is a flowchart of propulsion processing according to the second embodiment.

FIG. 9 is an overall view of a moving body according to a third embodiment.

Description of Embodiments

First embodiment

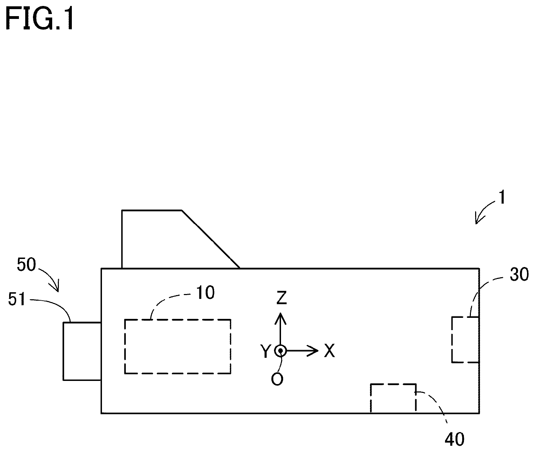

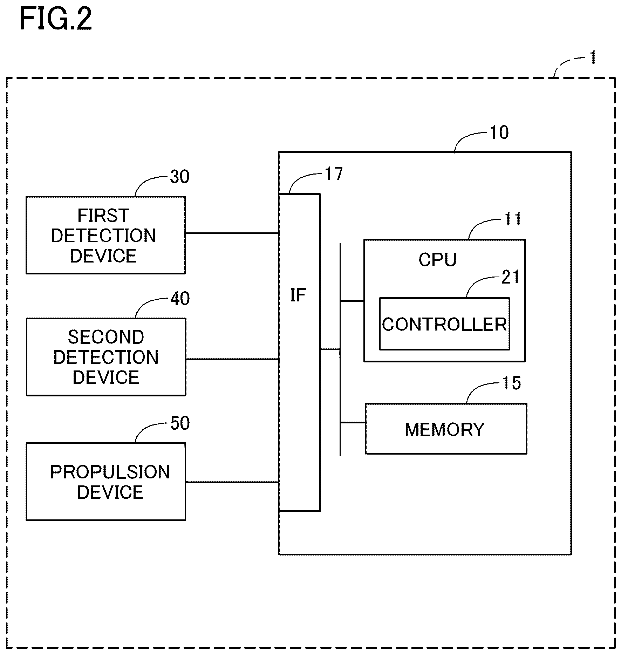

FIG. 1 is an overall view of a moving body according to a first embodiment. FIG. 2 is a block diagram illustrating a configuration of a control system of the moving body according to the first embodiment. The moving body according to the present embodiment is an unmanned autonomous underwater vehicle (AUV). Hereinafter, the moving body according to the present embodiment will also be referred to as the "AUV".

An AUV 1 includes a control device 10, a first detection device 30, a second detection device 40, and a propulsion device 50. The AUV 1 is driven using electric power from a battery mounted to the AUV 1 as a power source.

The propulsion device 50 is configured to be able to move the AUV 1 in a horizontal direction, and a vertical direction orthogonal to the horizontal direction. The propulsion device 50 includes a plurality of thrusters, such as a main propulsion thruster 51 for moving the AUV 1 in a forward direction, a vertical thruster for moving the AUV 1 in an up-down direction, and a horizontal thruster for moving the AUV 1 in a left-right direction, and includes a steering device that changes a route of the AUV 1. FIG. 1 illustrates the main propulsion thruster 51 as an example. However, the propulsion device 50 is not limited to the above-described configuration and may include swing thrusters that can change a direction in which a propulsion force is generated, for example. The propulsion device 50 propels the AUV 1 using command values output from the control device 10. In the present embodiment, the command values include a propulsion command value for moving the AUV 1 in a propulsion direction from a current position toward a target position, and an orientation command value for controlling an orientation of the AUV 1.

In FIG. 1, an AUV coordinate system, which is a coordinate system of the AUV 1, is exemplified. The AUV coordinate system includes an X axis, a Y axis, and a Z axis that are orthogonal to each other. An origin O of the AUV coordinate system is a predetermined point of the AUV 1. In the present embodiment, the origin O is a center of gravity of the AUV 1. The X axis, the Y axis, and the Z axis are the front-rear direction, the left-right direction, and the up-down direction of the AUV 1, respectively. The propulsion device 50 propels the AUV 1 using the propulsion command value corresponding to the X axis, the Y axis, and the Z axis output from the control device 10, and the orientation command value corresponding to angles of the AUV 1 around the X axis, around the Y axis, and around the Z axis. Note that the AUV 1 has a characteristic in that it can suppress power consumption by mainly using the main propulsion thruster 51 for moving in the forward direction. For example, when the X axis corresponding to the front-rear direction of the AUV 1 is aligned with the propulsion direction, the AUV 1 can mainly be propelled by the main propulsion thruster 51.

The first detection device 30 is a sensor that generates point group data, by detecting the surrounding environment of the AUV 1. The point group data is a collection of a plurality of point data. Each one of the point data includes relative position information of the point data with respect to the AUV 1. In the following description, the point data is also simply referred to as a "point". In the present embodiment, the first detection device 30 is an acoustic sensor that emits ultrasonic waves and receives reflected waves. The first detection device 30 is provided at the front of the AUV 1. As a result of detecting the surrounding environment by the transmission and reception of the ultrasonic waves, the first detection device 30 acquires two-dimensional point group data indicating a position of an object in the surrounding environment to the front of the AUV 1. Note that "object" includes a landform or a construction. The "object" can be an obstacle to the propulsion of the AUV 1.

The first detection device 30 generates three-dimensional point group data by repeatedly acquiring the two-dimensional point group data during the propulsion of the AUV 1. A coordinate system of the three-dimensional point group data is the AUV coordinate system, for example. The first detection device 30 inputs the generated three-dimensional point group data to the control device 10. Note that it is sufficient that the first detection device 30 be a desired sensor capable of acquiring the point group data, and may be an underwater LiDAR, or may be a multi-beam sonar that can directly acquire the three-dimensional point group data. Further, a plurality of the first detection devices 30 may be provided in the AUV 1. For example, one each of the first detection devices 30 may be provided at an upper front portion and a lower front portion of the AUV 1.

The second detection device 40 detects the current position of the AUV 1. The current position is also referred to as an own position of the AUV 1. In the present embodiment, the second detection device 40 is an inertial navigation system (INS) that includes an accelerometer and gyroscopes. In the present embodiment, an origin and each of axes of a coordinate system of the second detection device 40 are aligned with the origin and each of the axes of the AUV coordinate system. The second detection device 40 detects the current position of the AUV 1 by using detection values of the accelerometer and the gyroscopes to calculate a movement distance of the AUV 1 from a predetermined starting point. The second detection device 40 further detects the angle of the AUV 1 around the X axis, the Y axis, and the Z axis, using the detection values of the gyroscopes. The angles of the AUV 1 around the X axis, the Y axis, and the Z axis are a roll direction, a pitch direction, and a yaw direction, and represent the orientation of the AUV 1. The orientation of the AUV 1 is also referred to as a posture of the AUV 1, or bearings of the AUV 1. The second detection device 40 also functions as an orientation detection device that detects the orientation of the AUV 1. The second detection device 40 repeatedly detects the current position and the orientation during the start of movement of the AUV 1, and inputs the detected current position and orientation to the control device 10. Note that the second detection device 40 may include at least one of a doppler velocity log (DVL), a global navigation satellite system (GNSS), and an ultra-short baseline (USBL) system. Further, a detection device for detecting the orientation may be separate from a detection device for detecting the own position.

As illustrated in FIG. 2, the control device 10 is constituted as a computer including a CPU 11, a memory 15, and an interface 17. The memory 15 includes a nonvolatile memory and a volatile memory. The interface 17 is also referred to as an input unit for receiving a signal. Further, the interface 17 is also referred to as an output unit for transmitting a signal. The CPU 11 functions as a controller 21 by starting and executing programs stored in the memory 15.

When the control device 10 is turned on and a target position is input via the interface 17, the controller 21 executes propulsion processing to move the AUV 1 to the target position while avoiding peripheral objects. The target position is also referred to as a way point. Note that the target position may be stored in advance in the memory 15.

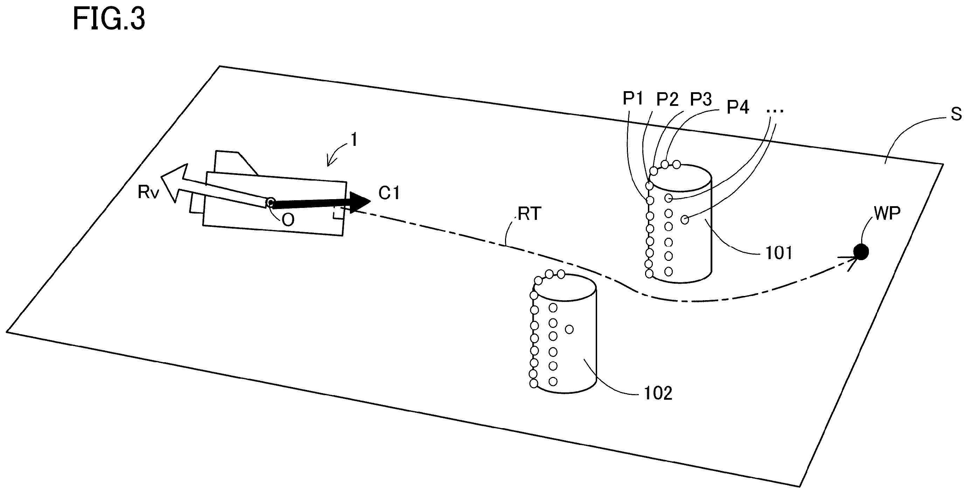

FIG. 3 is an image diagram for describing the propulsion processing executed by the controller 21. In FIG. 3, the AUV 1 advancing through water, objects 101 and 102 present in the surrounding environment of the AUV 1, and a target position WP are illustrated. The propulsion processing is performed using a technique developed based on a notion that each of a plurality of extremely small points P1, P2, P3, P4 ... present on surfaces of the objects 101 and 102 in the surrounding environment of the AUV 1 generate a virtual repulsion force that causes the AUV 1 to move away. This is because any one point based on the point group data is seen as a single tiny object. The repulsion force is a virtual force whose source is the one point, and becomes larger the closer a distance between the one point and the predetermined point of the AUV 1. The repulsion force is also a virtual repulsive force with which the one point acts on the AUV 1 to cause the AUV 1 to move away. A vector of the virtual repulsion force acting on the AUV 1 by the one point is calculated, and a repulsion force vector sum Rav obtained by summing the repulsion force vectors of the plurality of points is a force reflecting a surface shape of the object present in the surrounding environment of the AUV 1. In the present processing, the controller 21 uses the repulsion force vector sum Rv to modify a propulsion command value C1 and outputs the modified value to the propulsion device 50. In this way, the AUV 1 reaches the target position WP while taking a path RT that avoids the peripheral objects 101 and 102. Hereinafter, the propulsion processing executed by the controller 21 will be described in specific detail.

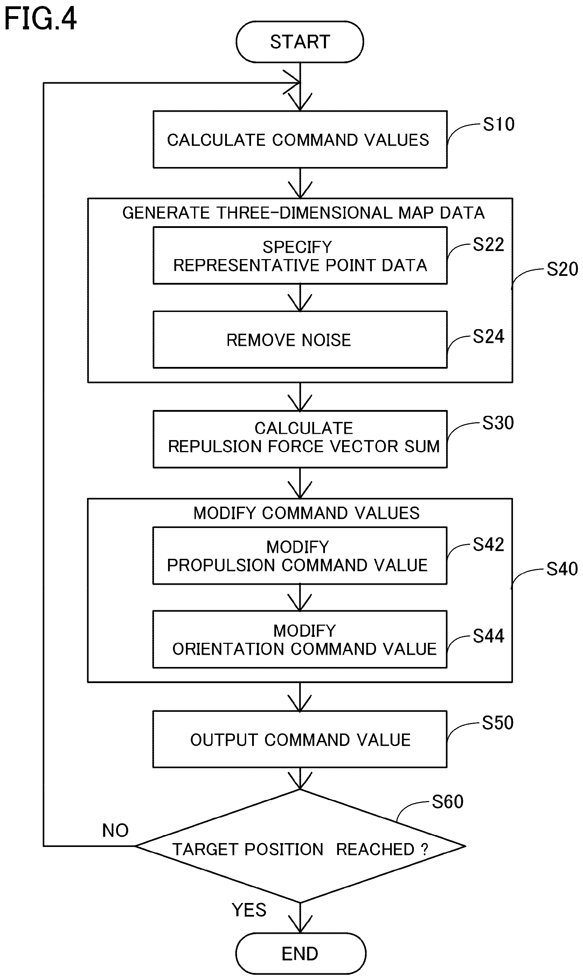

FIG. 4 is a flowchart of the propulsion processing. The propulsion processing is repeatedly executed during the movement of the AUV 1. At step S10, the controller 21 calculates the command values for the propulsion device 50 to move the AUV 1 from the current position to the target position. In the present embodiment, the controller 21 calculates a three-dimensional distance deviation from the own position to the target position, using the own position detected by the second detection device 40, and the target position. The three-dimensional distance deviation is a distance for each of the X axis, the Y axis, and the Z axis in the AUV coordinate system. Once the three-dimensional distance deviation is calculated, the controller 21 calculates the propulsion command value, for each of the axes, in which the distance deviation of each of the axes is proportionate. Further, the controller 21 calculates the orientation command value such that the X axis of the AUV 1 is aligned with the propulsion direction. The command values calculated at step S10 join the current position and the target position in a straight line, and are command values in which a bow heading is oriented toward the target position.

At step S20, the controller 21 generates three-dimensional map data, using the three-dimensional point group data generated by the first detection device 30. The three-dimensional map data is a collection of point data used in the calculation of the repulsion force vectors. Step S20 includes a step S22 that specifies representative point data, and a step S24 that removes point data satisfying a condition that is set in advance.

At step S22, the controller 21 divides the three-dimensional point group data into first regions of a predetermined size, and, based on each of the divided first regions, specifies only one point as the representative point data. The size of the first region is established using a resolution of the first detection device 30, simulation related to the size of the first region and the behavior of the AUV 1, and the like. In the present embodiment, the first region is a cube grid of the predetermined size. The controller 21 divides the three-dimensional point group data into the cube grids, and specifies the representative point data for the grids that include the point data constituting the point group data. In the present embodiment, the representative point data is a center point of the grid. The controller 21 does not specify the representative point data for the grids that do not include the point data. The controller 21 generates the three-dimensional map data by specifying the representative point data for each of the grids including the point data. The controller 21 stores the generated three-dimensional map data in the memory 15.

Further, at step S24, the controller 21 removes the point data that satisfy a predetermined first condition from the three-dimensional map data, as noise. In the present embodiment, the first condition includes when the point data are grouped in a number equal to or less than a predetermined number. The processing at step S24 is processing that regards the point data based on an object that will not affect the propulsion of the AUV 1 to be noise, and removes that point data from the three-dimensional map data. The present processing is also processing that leaves the point data, in the three-dimensional map data, when the point data of the predetermined number are present adjacent to each other. The first condition is set in advance using experimentation or simulation depending on an environment in which the AUV 1 is to be propelled, capabilities of the propulsion device 50 of the AUV 1, and the like. By performing the processing at step S24, objects that will not affect the propulsion of the AUV 1, such as rubbish floating in the water or the like, are not considered to be the point data used for calculating the repulsion force vectors. The controller 21 removes the point data satisfying the first condition from the three-dimensional map data generated at step S22, and updates the three-dimensional map data. The controller 21 stores the updated three-dimensional map data in the memory 15. Note that the controller 21 may remove the three-dimensional point group data and/or the three-dimensional map data from the memory 15 after a predetermined time period has elapsed from the acquisition thereof.

At step S30, the controller 21 calculates a repulsion force vector R1v for each of the representative point data of the three-dimensional map data, and calculates a repulsion force vector sum Rv obtained by summing the calculated plurality of repulsion force vectors. The repulsion force vector R1v is represented by Mathematical formula (1) below, for example, and the repulsion force vector sum Rv is represented by Mathematical formula (2) below, for example. In Mathematical formula (1), L1 is a distance between the one point data in the three-dimensional map data and the origin O of the AUV 1. Uv is a unit vector from the one point data toward the origin O of the AUV 1. J is a constant indicating a magnitude of the repulsion force vector in a unit distance. J is calculated by simulation or experimentation.

$$R1v = \frac{J}{L1} \times Uv \quad \cdots \quad (1)$$

$$Rv = \sum_{k=1}^{n} \left( \frac{J}{Lk} \times Ukv \right) \quad \cdots \quad (2)$$

As shown by Mathematical formula (1) and Mathematical formula (2), the repulsion force vector R1v according to the present embodiment is inversely proportional to the distance L1. The repulsion force vector R1v may be set to become larger the closer a distance between the AUV 1 and the point data. The repulsion force vector R1v may be inversely proportional to the square of the distance L1, for example.

As described with reference to FIG. 3, each of the extremely small points P1, P2, P3, P4 ... of the objects 101 and 102 present in the surrounding environment of the AUV 1 generate the virtual repulsion force that acts on the AUV 1. The repulsion force acts in a direction causing the AUV 1 to move away. Note that, since the three-dimensional map data is generated using the objects detected by the first detection device 30, the repulsion force acting on the AUV 1 is also generated from a seabed S. In the image diagrams in FIG. 3 and subsequent to FIG. 3, the point data representing the seabed S are omitted.

At step S40, the controller 21 modifies the command values calculated at step S10. In the present embodiment, step S40 includes a step S42 that modifies the propulsion command value and a step S44 that modifies the orientation command value.

At step S42, the controller 21 modifies the command value by adding the calculated repulsion force vector sum to the propulsion command value, calculated at step S10, for each of the X axis, the Y axis, and the Z axis in the AUV coordinate system. The command value is modified to cause the AUV 1 to move away from the object.

At step S44, the controller 21 further modifies the orientation command value. First, the controller 21 estimates a subsequent position of the AUV 1. The subsequent position is a position at which the AUV 1 is to be present at a time point at which the calculations of the propulsion processing are to be executed a subsequent time, using the propulsion command value modified by the processing at step S42. Then, the controller 21 modifies the orientation command value such that the bow heading of the AUV 1 is aligned with a vector joining the current position and the subsequent position.

At step S50, the controller 21 outputs the modified command values to the propulsion device 50. In the present embodiment, the controller 21 converts the propulsion command value and the orientation command value to an RPM of each of the thrusters provided in the propulsion device 50. As a result of performing the processing at step S50, the AUV 1 advances to the target position while avoiding the object. Note that, when the propulsion device 50 provided in the AUV 1 has a function to convert the command value to the RPM, the controller 21 may output the unconverted command value to the propulsion device 50.

At step S60, the controller 21 uses the current position input from the second detection device 40 and the target position to determine whether the AUV 1 has reached the target position. When the current position is not the target position, the controller 21 returns the processing to step S10. When the current position is the target position, the controller 21 ends the propulsion processing.

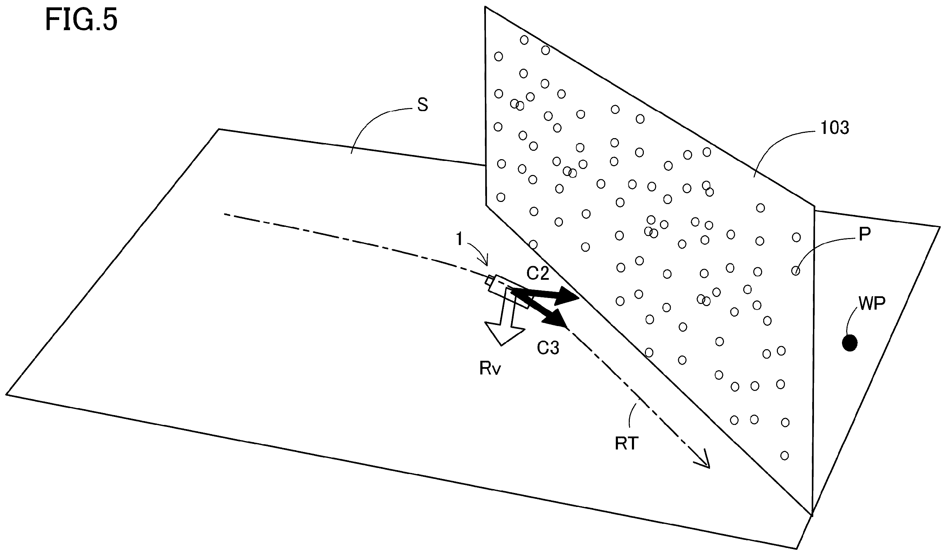

FIG. 5 is an image diagram illustrating an example of an avoidance operation of the AUV 1 with respect to an object 103. In FIG. 5, a propulsion command value C2 calculated at step S10, the repulsion force vector sum Rv calculated at step S30, and a propulsion command value C3 modified at step S40 are illustrated. The object 103 is a wall shaped object extending in the up-down direction and the left-right direction. The target position WP is present on the opposite side of the object 103 from the AUV 1. Since an upper edge of the object 103 in the vertical direction is outside a detection range of the first detection device 30, in relation to the object 103, the repulsion forces generated by a plurality of points P of a section on a higher side above the AUV 1 and by a plurality of the points P of a section on a lower side cancel each other out. Thus, in relation to the object 103, the repulsion force vector sum Rv generated by a plurality of the points P of a section further to the left than the AUV 1 and by a plurality of the points P of a section further to the right than the AUV 1 acts on the AUV 1. Thus, the propulsion command value C2 is modified to the propulsion command value C3 that propels the AUV 1 in parallel to the object 103. Further, the orientation command value is modified such that the bow heading of the AUV 1 is aligned with the direction of the propulsion command value C3. As a result, the AUV 1 advances to the target position WP while advancing in parallel to the object 103.

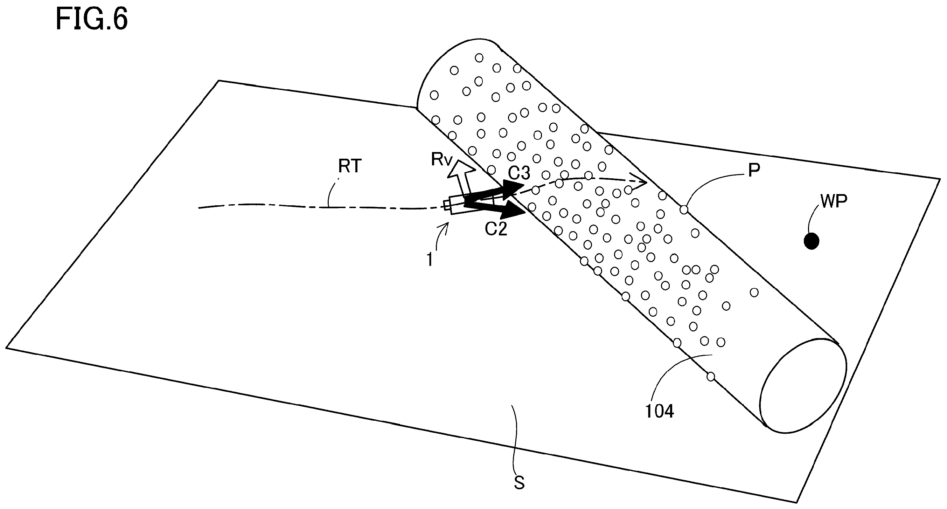

FIG. 6 is an image diagram illustrating an example of an avoidance operation of the AUV 1 with respect to an object 104. In a similar manner to the example illustrated in FIG. 5, in FIG. 6, the propulsion command value C2 calculated at step S10, the repulsion force vector sum Rv calculated at step S30, and the propulsion command value C3 modified at step S40 are illustrated. The object 104 is a cylindrical object extending in the left-right direction. The target position WP is present on the opposite side of the object 104 from the AUV 1. An upper edge of the object 104 in the vertical direction is inside the detection range of the first detection device 30, and points P that generate the repulsion force are not present above the object 104. Thus, in relation to the object 104, the upwardly oriented repulsion force vector sum Rv acts on the AUV 1. Thus, the propulsion command value C2 is modified to the propulsion command value C3 that propels the AUV 1 toward the target position WP while passing above the object 104. Further, the orientation command value is modified such that a bow heading of the AUV 1 is aligned with the direction of the propulsion command value C3. In the example illustrated in FIG. 6, the bow heading is oriented to the right side where the target position WP is positioned, and tilted upward to pass over the object 104. As a result, the AUV 1 advances with the bow heading oriented toward the target position WP, while rising to pass over the object 104.

According to the control device 10 according to the present embodiment described above, the repulsion force vector sum calculated by the controller 21 reflects the surface shape of the object present in the range that can be detected by the first detection device 30. Further, using the repulsion force vector sum, the controller 21 modifies the command values transmitted to the propulsion device 50. Thus, the AUV 1 according to the present embodiment can reach the target position, while moving along the surface shape of the object and efficiently avoiding a collision with the object.

For example, compared to a configuration in which the command values are modified using a force acting between the AUV 1 and the single object at the shortest distance from the AUV 1, the AUV 1 according to the present embodiment can efficiently avoid the object. Since the shortest distance between the AUV 1 and the object sequentially changes along with the propulsion of the AUV 1, in the configuration that modifies the command values using only the shortest distance, depending on the surface shape of the object or the capability of the propulsion device, there is a risk that the collision with the object cannot be avoided, or that the avoidance thereof may become inefficient.

Note that a number of the point data included in the three-dimensional point group data may change depending on the movement velocity of the AUV 1, even when the detection range is the same. For example, when the velocity of the AUV 1 is high, a total number of the point data may be small, and when the velocity of the AUV 1 is low, the total number of the point data may be large. In other words, since a spatial density of the point group data changes depending on the movement velocity of the AUV 1, the repulsion force vector sum may be influenced by a change in the movement velocity of the AUV 1. However, according to the present embodiment, the controller 21 divides the three-dimensional map data generated using the three-dimensional point group data into the first regions of the predetermined size, and specifies only the one point as the representative point for the point group data included in the divided first region. Thus, even when the number of point data included in the first region reflects the movement velocity of the AUV 1, only the one point is used as the point to calculate the repulsion force vector. In this way, the repulsion force vector sum is not affected by the changes in the movement velocity of the AUV 1. As a result, the AUV 1 according to the present embodiment can efficiently avoid the collision with the object, regardless of the velocity of the AUV 1.

Further, when a distance between the AUV 1 and a floating article in the water, such as rubbish or the like, is close, the floating article may generate a large repulsion force. In the present embodiment, the controller 21 removes the representative point data that are grouped in a number equal to or less than the predetermined number from the point data used to calculate the repulsion force vector sum. Thus, the repulsion force generated by the floating article is not added to the repulsion force vector sum. Therefore, the AUV 1 according to the present embodiment can efficiently avoid only the object that can become an obstacle, without avoiding an object that is not an obstacle, such as the floating article.

Further, the moving body according to the present embodiment is the AUV 1 that advances through water. The AUV 1 includes the propulsion device 50 that can move the AUV 1 in the horizontal direction and can move the AUV 1 in the vertical direction. Thus, according to the present embodiment, it is possible to move the AUV 1 in the vertical direction in accordance with the shape of the seabed S, and cause the AUV 1 to reach the target position quickly.

In addition, the controller 21 estimates the subsequent position of the AUV 1, and modifies the orientation command value such that the bow heading is oriented in the direction of the vector joining the current position to the subsequent position. The AUV 1 has a characteristic that, when the bow heading of the AUV 1 is aligned with the propulsion direction, the AUV 1 mainly uses the main propulsion thruster 51 and can thus suppress power consumption. As a result, according to the present embodiment, the power consumption of the AUV 1 is suppressed. Note that the controller 21 may modify the orientation command value such that the bow heading is oriented in the direction of a vector joining a previous position, which is the own position of the AUV 1 in a previous calculation of the propulsion processing, to the current position.

Second embodiment

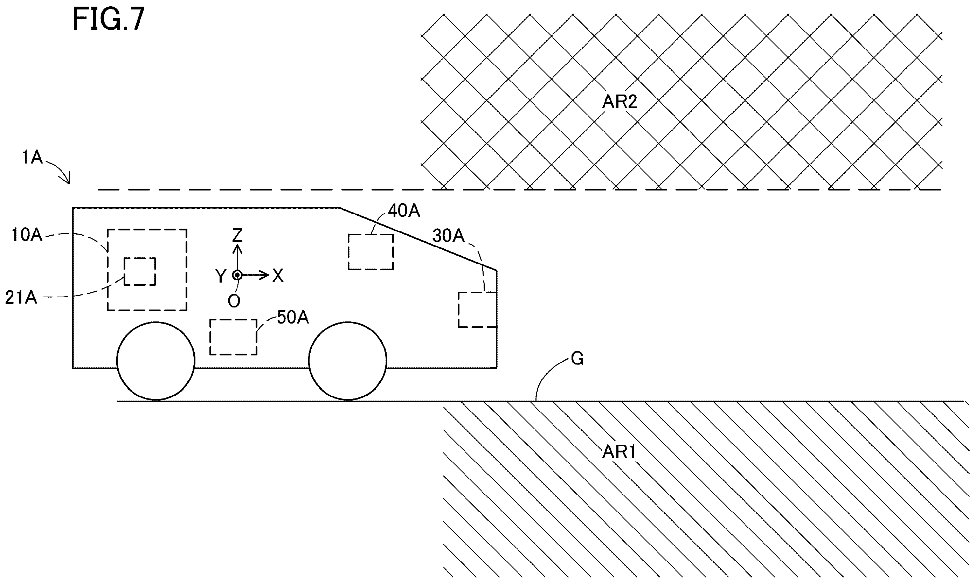

Hereinafter, the same reference signs will be used for configurations and processing that are the same as the above-described embodiment, and a detailed description and illustration thereof will be omitted. FIG. 7 is an overall view of a vehicle 1A that is the moving body according to a second embodiment. The vehicle 1A is a vehicle capable of autonomous driving at level 4 or above. The vehicle 1A includes a control device 10A, a first detection device 30A that acquires the point group data, a second detection device 40A that detects the own position and the orientation, and a propulsion device 50A. The first detection device 30A is a LiDAR, for example. The second detection device 40A is a GNSS and a gyroscope, for example.

As a whole, the propulsion device 50A can move the vehicle 1A in the horizontal direction, and cannot move the vehicle 1A in the vertical direction. In the present embodiment, the propulsion device 50A includes a drive device, a brake device, and a steering device. The drive device has a function to control a drive portion (not illustrated in the drawings) that drives wheels of the vehicle 1A. The brake device executes braking control of the vehicle 1A. The steering device updates an orientation of a yaw direction of the vehicle 1A, by controlling a steering angle of the wheels of the vehicle 1A.

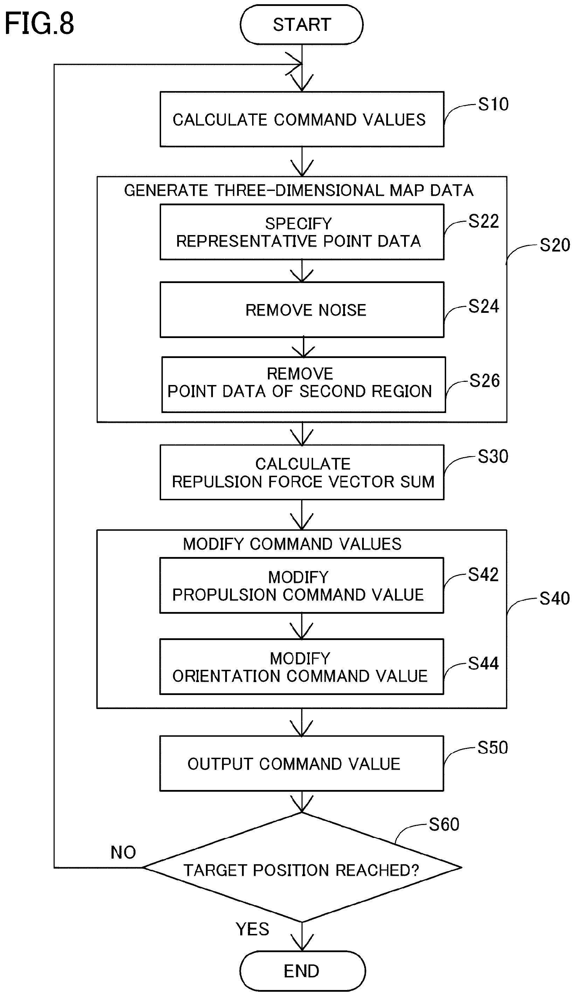

FIG. 8 is a flowchart of the propulsion processing executed by the control device 10A. In the present embodiment, step S20 that generates the three-dimensional map data further includes a step S26. At step S26, a controller 21A removes the point data present in a predetermined second region from the three-dimensional map data. An example of the second regions is illustrated in FIG. 7. The second region includes, for example a region AR1 that includes a virtual ground surface corresponding to a ground surface G along which the vehicle 1A travels, and a section lower than the virtual ground surface. The second region is established by experimentation or simulation in advance, in accordance with the detection range of the first detection device 30A, with the configuration of the vehicle body of the vehicle 1A, with an environment through which the vehicle 1A is to travel, and the like. The controller 21A removes the point data of the second region from the three-dimensional map data, and updates the three-dimensional map data. Further, at step S40, the controller 21A adds, to the propulsion command value, a component corresponding to the horizontal direction of the repulsion force vector sum. In the present embodiment, other main configurations of the vehicle 1A and the control device 10A, and the propulsion processing are similar to those of the first embodiment, and a description thereof is thus omitted here.

According to the second embodiment, the controller 21A removes the point data included in the region AR1 including the virtual ground surface and the section lower than the virtual ground surface from the point data used to calculate the repulsion force vector sum. Thus, the repulsion force vector sum is calculated based on the point group data of a section higher than the ground surface along which the vehicle 1A travels. Thus, according to the present embodiment, in a similar manner to the first embodiment, the vehicle 1A can reach the target position, while moving along a surface shape of an object and efficiently avoiding a collision with the object. In this way, the technology developed based on the notion of generating the virtual repulsion force by which the object in the surrounding environment of the moving body causes the moving body to move away can also be applied to the moving body that moves on land, including the vehicle 1A.

Note that, as illustrated in FIG. 7, the second region may also include a region AR2 of a section higher than the vehicle body of the vehicle 1A. At step S26, in addition to the region AR1, the controller 21A may remove the point data of the region AR2 of the section higher than the vehicle body. According to this aspect, the repulsion force vector is not calculated for an object that is present higher than the vehicle 1A and that does not become an obstacle to the traveling of the vehicle 1A. Thus, a calculation load of the control device 10A can be reduced. Further, the vehicle 1A can move efficiently without performing an unnecessary avoidance operation with respect to the object that is not an obstacle to the traveling of the vehicle 1A.

Third embodiment

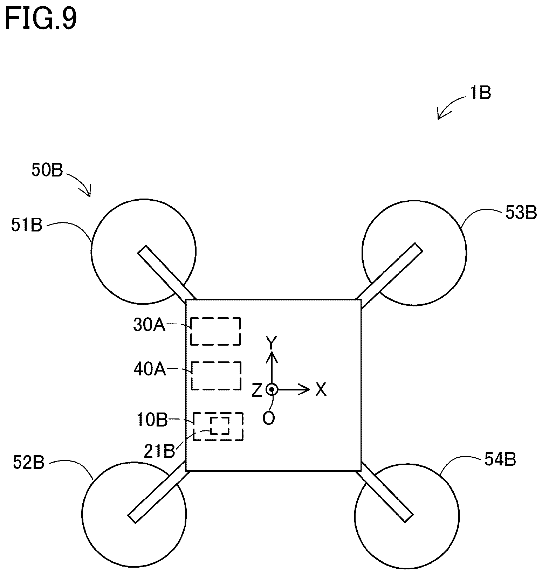

FIG. 9 is a view illustrating an overall configuration of a drone 1B as the moving body according to a third embodiment. The moving body according to the present embodiment is an aerial vehicle capable of autonomous navigation without being steered by a pilot. Note that examples of "aerial device" include an airplane and a helicopter. The airplane includes a vertical take-off and landing aircraft (VTOL), in addition to an aircraft that performs normal take off and landing.

A propulsion device 50B of the drone 1B includes a plurality of motors disposed radially from a center of the body of the drone 1B, and rotor blades 51B, 52B, 53B, and 54B. The propulsion device 50B can move in the horizontal direction and the vertical direction, using command values, output from a control device 10B, including an RPM or a rotational speed of each of the rotor blades. Note that, in contrast to the AUV 1 according to the first embodiment, the power consumption of the drone 1B does not change depending on the rotor being used. Thus, a controller 21B does not perform the processing at step S44 in the propulsion processing, and does not calculate the orientation command value. Other main configurations of the drone 1B and the control device 10B, and the propulsion processing are similar to those of the AUV 1 and the control device 10 according to the first embodiment, and a description thereof is thus omitted here. The control device 10B and the drone 1B according to the third embodiment achieve the same or similar effects as those of the first embodiment.

Note that, in a similar manner to the AUV 1 according to the first embodiment, when the aerial device has a characteristic of being able to suppress the power consumption when advancing while an orientation of a fuselage thereof is aligned with the propulsion direction, the controller 21B may perform the processing at step S44, and may calculate the orientation command value.

Other embodiments

Each of the steps of the propulsion processing in each of the above-described embodiments may be switched as appropriate, or each of the steps may be performed simultaneously. For example, the processing at step S10 that calculates the command values and the processing at step S20 that generates the three-dimensional map data may be performed simultaneously, or the order thereof may be switched. Further, the processing at step S24 and at step S26 may be performed with respect to the point group data before the representative point data is specified by the processing at step S22.

The processing at step S22 may be omitted. The controller 21 may calculate the repulsion force vector for each of the points of the point group data. For example, when the movement velocity of the moving bodies 1, 1A, and 1B is constant, the total of the repulsion force vectors calculated for each of the points of the point group data accurately reflects the surface shape of the peripheral object. Thus, in this aspect also, the moving bodies 1, 1A, and 1B can reach the target position while efficiently avoiding the collision with the object.

The moving bodies controlled by the above-described control devices 10, 10A, and 10B are not limited to the moving bodies of the above-described embodiments, and may be any desired moving body. The moving body may be, for example, a snowplow, a hydraulic shovel, a robot arm, or the like. When the moving body is the snowplow, the first condition at step S22 may be set by calculating, by experimentation or simulation, a relationship between snow in the air and a number of or degree of adjacency of the point data. Further, the second region may include a region of snow that has accumulated on a ground surface on which the snowplow is to travel and a region lower than the snow that has accumulated. According to this aspect, the repulsion force generated by the snow in the air and the snow that has accumulated on the ground surface is not added to the repulsion force vector sum. Thus, the avoidance operation is not performed with respect to the object that is not an obstacle of a snow removal operation, and the snowplow can avoid collision with an object and reach the target position while performing the snow removal operation.

The origin and each of the axes of the coordinate system of the second detection devices 40 and 40A need not necessarily be aligned with the origin and each of the axes of the coordinate system of the moving bodies 1, 1A, and 1B. The control device 10, 10A, and 10B may be configured to be able to convert, in both directions, given coordinates of the coordinate system of the second detection devices 40 and 40A and given coordinates of the coordinate system of the moving body.

The first detection devices 30 and 30A may sequentially acquire the two-dimensional point group data by detecting the surrounding environment of the moving body, and the control devices 10, 10A, and 10B may generate the three-dimensional point group data using the sequentially input two-dimensional point group data.

The point group data used by the controllers 21 and 21A to calculate the repulsion force vector may be the two-dimensional point group data. When the point group data is the two-dimensional point group data, the first region may be a square grid of a predetermined size, for example. The representative point data may be a predetermined point in the square grid.

Further, functions of structural elements disclosed in the present specification can be executed using a circuit or a processing circuit configured or programmed to execute the disclosed functions, the circuit or processing circuit including a general processor, a dedicated processor, an integrated circuit, an application specific integrated circuit (ASIC), a known circuit, and/or a combination of these. Since the processor includes a transistor and/or other circuits, the processor is considered to be the processing circuit or the circuit. In the present disclosure, the circuit, a unit, or means are hardware that execute the enumerated functions, or are hardware programmed to execute the enumerated functions. The hardware may be the hardware disclosed in the present specification, or alternatively, may be other known hardware programmed or configured to execute the enumerated functions. When the hardware is the processor considered to be a type of circuit, the circuit, the means, or the unit are obtained by combining the hardware with software, and the software is used in the configuration of the hardware and/or the processor.

The present disclosure is not limited to the above-described embodiments, and can be realized by various other aspects insofar as these do not depart from the gist and scope thereof. For example, the present disclosure can be realized by the following aspects. Each of technical features in the above-described embodiments corresponding to technical features of each of the aspects described below can be switched or combined, as appropriate, in order to solve some or all of the issues of the present disclosure, or to achieve some or all of the effects of the present disclosure. Further, insofar as these technical features are not described as essential to the present specification, they may be omitted as appropriate.

(1) According to a first aspect of the present disclosure, a control device is provided that controls a propulsion device of a moving body. The control device includes an input unit configured to have point group data input thereto, the point group data being generated by a first detection device detecting a surrounding environment of the moving body, and includes a controller. The controller is configured to generate a command value for the propulsion device, using an own position of the moving body and a target position of the moving body, the command value being used to move the moving body to the target position. The controller is configured to calculate a repulsion force vector for a plurality of point data, the repulsion force vector being a vector representing a virtual repulsion force to cause the moving body to move away, the point data being based on the generated point group data, and the repulsion force vector becoming larger the smaller a distance to the moving body, and to calculate a repulsion force vector sum obtained by summing a plurality of the calculated repulsion force vectors. The controller is configured to modify the generated command value using the calculated repulsion force vector sum.

According to this aspect, the repulsion force vector sum obtained by summing the virtual repulsion force vectors that are based on the point group data is a force corresponding to a surface shape of an object in the environment surrounding the moving body. The controller modifies the command value for the propulsion device of the moving body, using the repulsion force vector sum. Thus, it is possible to move the moving body to the target position while efficiently avoiding a collision with the object.

(2) In the above-described aspect, the controller may be configured to divide the point group data into first regions of a predetermined size, and specify one representative point data, for the point group data included in the divided first region. The controller may calculate the repulsion force vector for a plurality of the representative point data, using the representative point data as the point data.

According to this aspect, even when density fluctuations occur in a spatial density of the point group data, depending on a movement velocity of the moving body, the one representative point data is specified for the one first region, and the repulsion force vector is calculated for the representative point data. Thus, it is possible to suppress the repulsion force vector sum from being influenced by the movement velocity of the moving body. As a result, the control device can move the moving body to the target position while even more efficiently avoiding the collision with the object.

(3) In the above-described aspect, the controller may be further configured to remove, from the plurality of point data to be used to calculate the repulsion force vector sum, the point data grouped in a number equal to or less than a predetermined number.

According to this aspect, the repulsion force generated by the point data grouped in the number less than or equal to the predetermined number is isolated from the other point data, and is not added to the repulsion force vector sum. Thus, for example, an avoidance operation of the moving body with respect to an object that is not an obstruction, such as rubbish or the like, is suppressed.

(4) In the above-described aspect, the controller may be further configured to remove, from the plurality of point data to be used to calculate the repulsion force vector sum, the point data present in a second region set in advance with respect to the moving body.

According to this aspect, for example, an object present in the second region is removed from the plurality of point data to be used to calculate the repulsion force vector sum. Thus, an avoidance operation of the moving body with respect to an object present in the second region is suppressed. Further, a load on the control device for calculating the repulsion force vector sum is reduced.

(5) In the above-described aspect, the command value may include a propulsion command value for propelling the moving body in a propulsion direction toward the target position. The controller may modify the propulsion command value using the repulsion force vector sum.

According to this aspect, the propulsion command value is modified to cause the moving body to move away from the obstacle. Thus, the collision between the moving body and the object is avoided.

(6) In the above-described aspect, the command value may include an orientation command value for controlling an orientation of the moving body. The controller may modify the orientation command value to cause an orientation of the moving body to be aligned with the propulsion direction.

According to this aspect, the orientation of the moving body is directed in the propulsion direction by the orientation command value being modified. Thus, the moving body can be efficiently moved to the target position.

Note that, in this aspect, the orientation of the moving body may be input to the control device from an orientation detection device that detects the orientation of the moving body. The orientation of the moving body is also referred to as the bearings of the moving body, or a posture of the moving body. For example, when the moving body is configured by a boat body or a fuselage, the orientation of the moving body is also referred to as a bow heading, and an airplane heading, respectively. Further, the moving body may be configured such that a power consumption amount of the propulsion device changes depending on the bearings of the moving body with respect to the propulsion direction. The power consumption amount may be reduced by aligning the orientation of the moving body with the propulsion direction

(7) According to a second aspect of the present disclosure, a moving body is provided that includes the control device according to the above-described aspect, the first detection device, a second detection device configured to detect the own position, and the propulsion device.

According to this aspect, the moving body is provided that can move to the target position while avoiding a collision with an object.

(8) In the above-described aspect, the propulsion device may be configured to propel the moving body in a horizontal direction and a vertical direction orthogonal to the horizontal direction, in accordance with the command value.

According to this aspect, the moving body can efficiently avoid the collision with the object, by moving in the horizontal direction and the vertical direction.

(9) According to a third aspect of the present disclosure, a method is provided that controls a propulsion device of a moving body. In this method, a control device controlling the propulsion device is configured to: generate a command value for the propulsion device, using an own position of the moving body and a target position of the moving body, the command value being used to move the moving body to the target position; calculate a repulsion force vector for a plurality of point data, the repulsion force vector being a vector representing a virtual repulsion force with which the point data cause the moving body to move away, the point data being based on point group data generated by a first detection device detecting a surrounding environment of the moving body, and the repulsion force vector becoming larger the smaller a distance to the moving body; calculate a repulsion force vector sum obtained by summing a plurality of the calculated repulsion force vectors; and modify the generated command value using the calculated repulsion force vector sum.

According to this aspect, the repulsion force vector sum obtained by summing the virtual repulsion force vectors that are based on the point group data is a force corresponding to a surface shape of the object in the surrounding environment of the moving body. Since the command value for the propulsion device of the moving body is modified using the repulsion force vector sum, a collision between the moving body and the object can be efficiently avoided and the moving body can be moved to the target position.

(10) According to a fourth aspect of the present disclosure, a program is provided that controls a propulsion device of a moving body. This program causes a computer to perform processes including: generating a command value for the propulsion device, using an own position of the moving body and a target position of the moving body, the command value being used to move the moving body to the target position; calculating a repulsion force vector for a plurality of point data, the repulsion force vector being a vector representing a virtual repulsion force with which the point data cause the moving body to move away, the point data being based on point group data generated by a first detection device detecting a surrounding environment of the moving body, and the repulsion force vector becoming larger the smaller a distance to the moving body; calculating a repulsion force vector sum obtained by summing a plurality of the calculated repulsion force vectors; and modifying the generated command value using the calculated repulsion force vector sum. According to this aspect, the repulsion force vector sum obtained by summing the virtual repulsion force vectors that are based on the point group data is a force corresponding to the surface shape of the object in the surrounding environment of the moving body. Since the command value for the propulsion device of the moving body is modified using the repulsion force vector sum, a collision between the moving body and the object can be efficiently avoided and the moving body can be moved to the target position.

The present disclosure can be realized by various aspects other than those described above. For example, the present disclosure can be realized using an aspect in which a non-transitory storage medium stores a computer program for realizing functions of the control device, or the like.

**Claims**

1. A control device that controls a propulsion device of a moving body, the control device comprising:

   an input unit configured to have point group data input thereto, the point group data being generated by a first detection device detecting a surrounding environment of the moving body; and
   a controller, wherein
   the controller is configured to

   generate a command value for the propulsion device, using an own position of the moving body and a target position of the moving body, the command value being used to move the moving body to the target position,
   calculate a repulsion force vector for a plurality of point data, the repulsion force vector being a vector representing a virtual repulsion force with which the point data cause the moving body to move away, the point data being based on the generated point group data, and the repulsion force vector becoming larger the smaller a distance to the moving body,
calculate a repulsion force vector sum obtained by summing a plurality of the calculated repulsion force vectors, and
modify the generated command value using the calculated repulsion force vector sum.

2. The control device according to claim 1, wherein the controller is configured to

   divide the point group data into first regions of a predetermined size, and specify one representative point data, for the point group data included in the divided first region, and
   calculate the repulsion force vector for a plurality of the representative point data, using the representative point data as the point data.

3. The control device according to claim 1, wherein the controller is further configured to remove, from the plurality of point data to be used to calculate the repulsion force vector sum, the point data grouped in a number equal to or less than a predetermined number.

4. The control device according to claim 1, wherein the controller is further configured to remove, from the plurality of point data to be used to calculate the repulsion force vector sum, the point data present in a second region set in advance with respect to the moving body.

5. The control device according to claim 1, wherein

   the command value includes a propulsion command value for propelling the moving body in a propulsion direction toward the target position, and
   the controller modifies the propulsion command value using the repulsion force vector sum.

6. The control device according to claim 5, wherein

   the command value includes an orientation command value for controlling an orientation of the moving body, and
   the controller modifies the orientation command value to cause an orientation of the moving body to be aligned with the propulsion direction.

7. A moving body comprising:

   the control device according to claim 1;
   the first detection device;
   a second detection device configured to detect the own position of the moving body; and
   the propulsion device.

8. The moving body according to claim 7, wherein the propulsion device propels the moving body in a horizontal direction and a vertical direction orthogonal to the horizontal direction, in accordance with the command value.

9. A control method that controls a propulsion device of a moving body, wherein a control device controlling the propulsion device is configured to

   generate a command value for the propulsion device, using an own position of the moving body and a target position of the moving body, the command value being used to move the moving body to the target position,
   calculate a repulsion force vector for a plurality of point data, the repulsion force vector being a vector representing a virtual repulsion force with which the point data cause the moving body to move away, the point data being based on point group data generated by a first detection device detecting a surrounding environment of the moving body, and the repulsion force vector becoming larger the smaller a distance to the moving body,
   calculate a repulsion force vector sum obtained by summing a plurality of the calculated repulsion force vectors, and
   modify the generated command value using the calculated repulsion force vector sum.

10. A program that controls a propulsion device of a moving body, the program causing a computer to perform processes comprising:

   generating a command value for the propulsion device, using an own position of the moving body and a target position of the moving body, the command value being used to move the moving body to the target position;
   calculating a repulsion force vector for a plurality of point data, the repulsion force vector being a vector representing a virtual repulsion force with which the point data cause the moving body to move away, the point data being based on point group data generated by a first detection device detecting a surrounding environment of the moving body, and the repulsion force vector becoming larger the smaller a distance to the moving body;
   calculating a repulsion force vector sum obtained by summing a plurality of the calculated repulsion force vectors; and
   modifying the generated command value using the calculated repulsion force vector sum.

FIG.1

# FIG.2

# FIG.3

EP 4 641 341 A1

## FIG.4

START

CALCULATE COMMAND VALUES — S10

GENERATE THREE-DIMENSIONAL MAP DATA

SPECIFY REPRESENTATIVE POINT DATA — S22

REMOVE NOISE — S24

— S20

CALCULATE REPULSION FORCE VECTOR SUM — S30

MODIFY COMMAND VALUES

MODIFY PROPULSION COMMAND VALUE — S42

MODIFY ORIENTATION COMMAND VALUE — S44

— S40

OUTPUT COMMAND VALUE — S50

TARGET POSITION REACHED ? — S60

NO

YES

END

FIG.5

# FIG.6

FIG.7

EP 4 641 341 A1

FIG.8

START

CALCULATE COMMAND VALUES —S10

GENERATE THREE-DIMENSIONAL MAP DATA

SPECIFY
REPRESENTATIVE POINT DATA —S22

REMOVE NOISE —S24

REMOVE
POINT DATA OF SECOND REGION —S26

—S20

CALCULATE
REPULSION FORCE VECTOR SUM —S30

MODIFY COMMAND VALUES

MODIFY
PROPULSION COMMAND VALUE —S42

MODIFY
ORIENTATION COMMAND VALUE —S44

—S40

OUTPUT COMMAND VALUE —S50

—S60

TARGET POSITION REACHED?

NO

YES

END

# FIG.9

## INTERNATIONAL SEARCH REPORT

| | International application No. |
|---|---|
| | **PCT/JP2023/046105** |

| A. | CLASSIFICATION OF SUBJECT MATTER |
|---|---|

*G05D 1/622*(2024.01)i; *G05D 1/43*(2024.01)i; *G05D 1/46*(2024.01)i
FI:  G05D1/622; G05D1/43; G05D1/46

According to International Patent Classification (IPC) or to both national classification and IPC

| B. | FIELDS SEARCHED |
|---|---|

Minimum documentation searched (classification system followed by classification symbols)

G05D1/622; G05D1/43; G05D1/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2012-11886 A (KABUSHIKI KAISHA TOYOTA CHUO KENKYUSHO) 19 January 2012 (2012-01-19)<br>entire text, all drawings | 1-10 |
| A | JP 2011-253361 A (NSK LTD.) 15 December 2011 (2011-12-15)<br>paragraph [0022] | 1-10 |
| A | JP 2017-151687 A (HONDA MOTOR CO., LTD.) 31 August 2017 (2017-08-31)<br>entire text, all drawings | 1-10 |

☐ Further documents are listed in the continuation of Box C.   ☑ See patent family annex.

| | Special categories of cited documents: | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **11 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/046105**

| Patent document cited in search report | Publication date (day/month/year) | Patent family member(s) | Publication date (day/month/year) |
|---|---|---|---|
| JP 2012-11886 A | 19 January 2012 | (Family: none) | |
| JP 2011-253361 A | 15 December 2011 | (Family: none) | |
| JP 2017-151687 A | 31 August 2017 | US 2017/0241790 A1 entire text, all drawings | |

Form PCT/ISA/210 (patent family annex) (July 2022)

**EP 4 641 341 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6765156 B